# EUROPEAN PATENT SPECIFICATION

(11) **EP 2 062 953 B1**
(45) Date of publication and mention of the grant of the patent: **17.08.2011**
(21) Application number: 08169410.1
(22) Date of filing: 19.11.2008
(51) Int. Cl.: C09J 7/02

(54) **Heat-sensitive adhesive material**
Wärmeempfindliches Klebematerial
Matériau adhésif sensible à la chaleur

(30) Priority: 20.11.2007 JP 2007300397
(43) Date of publication of application: 27.05.2009
(73) Proprietor: Ricoh Company, Ltd., Tokyo 143-8555 (JP)
(72) Inventor: Kuga, Yutaka, Tokyo 143-8555 (JP); Yamaguchi, Takehito, Tokyo 143-8555 (JP); Shimbo, Hitoshi, Tokyo 143-8555 (JP)
(74) Representative: Barz, Peter

(56) References cited:
- JP-A- 2002 114 955
- JP-A- 2006 083 222

## Description

### BACKGROUND OF THE INVENTION

### Field of the Invention

The present invention relates to a heat-sensitive adhesive material having a heat-sensitive adhesive layer which is non-adhesive at room temperature, but exhibits adherence by heating and maintains the adherence even after the adherence is exhibited, the heat-sensitive adhesive material having excellent adhesive force particularly to rough-surfaced adherends such as a corrugated board at low temperature environment (0°C).

### Description of the Related Art

Recently, label adhesive materials are increasingly used for price labels, product (bar code) labels, quality labels, ingredient labels, and advertisement labels (stickers). As for label recording methods, various methods are developed such as inkjet recording methods, heat-sensitive recording methods, and pressure-sensitive recording methods.

Those label adhesive materials typically have a structure, for example, in which an adhesive layer and release paper are laminated on a surface of a label, which is opposite to a surface on which information is recorded. Conventionally, such a label adhesive material is widely used because the label adhesive material can be easily affixed only by pressure after release paper is peeled off. However, release paper peeled off from an adhesive sheet is hard to be collected and recycled, and in most cases, the peeled release paper discarded subsequently.

Consequently, a heat-sensitive adhesive material which does not exhibit adherence at room temperature and requires no release paper has been a focus of attention recently. Such heat-sensitive adhesive materials have been proposed that require no release paper: for example, a label, in which a blocking layer which exhibits adherence by activation through application of light or heat, is formed on a pressure-sensitive adhesive layer (Japanese Patent Application Laid-Open (JP-A) No. 9-20079); a heat-adhesive label, which contains a plasticizer solid at room temperature in a coating liquid for heat-adhesive layer, and is normally non-adhesive, but the adhesive is thermally activated by heating (JP-A No. 2001-64603); and a heat-sensitive adhesive material having a heat-sensitive adhesive layer formed from a heat-sensitive adhesive which mainly contains fine particles of a mixture of a thermoplastic resin and a plasticizer (JP-A No. 2002-114955).

The heat-sensitive adhesive, as described in "Secchaku Binran (Adhesive Handbook)", 12th ed., Kobunshi Kankokai (1980), pp. 131-135, basically contains a thermoplastic resin and thermofusible material like a solid plasticizer, and further contains an adhesion imparting agent as necessary. In proposals of JP-A Nos. 2001-64603 and 2002-114955, heat-sensitive adhesive layers themselves are improved. The thermoplastic resin is for imparting adhesive force, on the other hand, the thermofusible material does not impart plasticity to a resin because it is solid at room temperature, however, it is fused by application of heat to swell or soften a resin so as to exhibit its adhesive force. Moreover, the adhesion imparting agent also enhances adherence. The thermofusible material in the heat-sensitive adhesive is slowly crystallized after fused by application of heat. Therefore, the thermofusible material can maintain adherence for a long period of time even after a heat source is eliminated. However, after the heat-sensitive adhesive exhibits adherence, the adhesive force decreases with a lapse of time. Moreover, there is a need to apply a high thermal energy when the heat-sensitive adhesive is thermally activated.

To solve these problems, a technique is proposed to reduce thermal energy i.e., impart high sensitivity upon thermal activation of such a heat-sensitive adhesive by forming a heat-insulating layer containing plastic hollow particles and a water-soluble binder in between a support and a heat-sensitive adhesive layer (see Japanese Patent (JP-B) No. 2683733 and Japanese Patent Application Laid-Open (JP-A) Nos. 2001-64603 and 10-152660). These proposals can be relatively effective in reducing thermal energy of the heat-sensitive adhesive, however, the adhesive force to rough-surfaced adherends such as a corrugated board and a polyolefin wrap has not reached the practical level because the water-soluble binder that does not exhibit adherence at room temperature is used therein. In addition, these proposed heat-sensitive adhesives have not yet resolved a problem that the adhesive force after exhibiting adherence decreases with a lapse of time.

To solve these problems, JP-A No. 2006-83196 proposes a heat-sensitive adhesive material, which has excellent adhesive force to rough-surfaced adherends such as a corrugated board, a polyolefin wrap and the like, without decreasing adhesive force with a lapse of time, and also has excellent blocking resistance, and is capable of being thermally activated with low energy, by providing an adhesive under layer between a support and a heat-sensitive adhesive layer. The adhesive under layer mainly contains a thermoplastic resin having a glass transition temperature (Tg) of -70°C to -10°C. However, the adhesive force of the heat-sensitive adhesive material at low temperature has not yet reached the practical level. Particularly, adhesive force to rough-surfaced adherends such as a corrugated board at low temperature environment has been a big problem.

JP-A No. 2006-83222 proposes a heat-sensitive adhesive material which contains a heat-sensitive adhesive layer containing a thermoplastic resin, adhesion imparting agent and thermofusible material and formed over one surface of a support, and has excellent adhesive force to rough-surfaced adherends such as a corrugated board, a polyolefin wrap and the like, without decreasing adhesive force with a lapse of time, and also has excellent blocking resistance, and is capable of being thermally activated with low energy, by providing an elastic under layer between the support and the heat-sensitive adhesive layer. The elastic under layer mainly contains a resin having 100% modulus in accordance with JIS K6251 of 35kgf/cm² or less. However, the adhesive force at low temperature environment (0°C) has not yet reached the practical level, particularly, a decrease in the adhesive force of the heat-sensitive adhesive material to rough-surfaced adherends such as a corrugated board at low temperature environment has been a significant problem. Currently, it has been desired to improve the heat-sensitive adhesive material.

### BRIEF SUMMARY OF THE INVENTION

An object of the present invention is to provide a heat-sensitive adhesive material excellent in adhesive force to rough-surfaced adherends such as a corrugated board at low temperature environment (0°C), and having a heat-sensitive adhesive layer which can be thermally activated.

To solve the above problems, the inventors of the present invention have been intensively studied and found that a heat-sensitive adhesive material containing a support, an adhesive under layer, an intermediate layer and a heat-sensitive adhesive layer formed over a surface of the support in this order, wherein the adhesive under layer containing a thermoplastic resin having a mass average molecular mass of 100,000 to 1,500,000, is formed between the support and the heat-sensitive adhesive layer, thereby allowing the thermoplastic resin in the adhesive under layer to move easily to the heat-sensitive adhesive layer upon thermal activation, and that adhesive force is enhanced. Moreover, the inventors found that the thermoplastic resin does not easily move at low temperature environment, but it easily moves by having a mass average molecular mass of 100,000 to 500,000, thereby exhibiting an effect of enhancing adhesive force.

The present invention is based on the findings of the inventors of the present invention, and means for solving the above-described problems are described below:
<1> A heat-sensitive adhesive material containing a support; and an adhesive under layer, an intermediate layer and a heat-sensitive adhesive layer formed over one surface of the support in this order, wherein the intermediate layer contains at least a thermoplastic resin and hollow particles, the heat-sensitive adhesive layer contains at least a thermoplastic resin, an adhesion imparting agent and a thermofusible material, and the adhesive under layer contains at least a thermoplastic resin, the thermoplastic resin has a glass transition temperature (Tg) of -70°C to -10°C and a mass average molecular mass of 100,000 to 1,500,000.
<2> The heat-sensitive adhesive material according to <1>, wherein the thermoplastic resin in the adhesive under layer has a mass average molecular mass of 100,000 to 500,000.
<3> The heat-sensitive adhesive material according to any one of <1> and <2>, wherein the thermoplastic resin in the adhesive under layer contains at least one selected from acrylic acid ester copolymers, methacrylic acid ester copolymers, acrylic acid ester-methacrylic acid ester copolymers, acrylic acid ester-styrene copolymers, acrylic acid ester-methacrylic acid ester-styrene copolymers, and ethylene-vinyl acetate copolymers.
<4> The heat-sensitive adhesive material according to any one of <1> to <3>, wherein the hollow particles in the intermediate layer are a hollow spherical plastic particles.
<5> The heat-sensitive adhesive material according to any one of <1> and <4>, wherein the thermoplastic resin in the intermediate layer contains at least one selected from acrylic acid ester copolymers, methacrylic acid ester copolymers, acrylic acid ester-methacrylic acid ester copolymers, acrylic acid ester-styrene copolymers, acrylic acid ester-methacrylic acid ester-styrene copolymers, and ethylene-vinyl acetate copolymers.
<6> The heat-sensitive adhesive material according to any one of <1> to <5>, wherein the support has at least a recording layer on a surface opposite to a surface on which the heat-sensitive adhesive layer is formed.
<7> The heat-sensitive adhesive material according to <6>, wherein the recording layer is a heat-sensitive recording layer.

The heat-sensitive adhesive material of the present invention contains a support, and an adhesive under layer, an intermediate layer and a heat-sensitive adhesive layer formed over one surface of the support in this order, wherein the intermediate layer contains at least a thermoplastic resin and hollow particles, the heat-sensitive adhesive layer contains at least a thermoplastic resin, an adhesion imparting agent and a thermofusible material, and the adhesive under layer contains at least a thermoplastic resin, the thermoplastic resin has a glass transition temperature (Tg) of -70°C to -10°C and a mass average molecular mass of 100,000 to 1,500,000, therefore, the thermoplastic resin in the adhesive under layer easily moves to the heat-sensitive adhesive layer upon thermal activation, thereby enhancing adhesive force, particularly, obtaining excellent adhesive force to rough-surfaced adherends such as a corrugated board at low temperature environment (0°C).

### DETAILED DESCRIPTION OF THE INVENTION

The heat-sensitive adhesive material of the present invention contains a support, and an adhesive under layer, an intermediate layer and a heat-sensitive adhesive layer formed over one surface of the support in this order, and further contains other layers as necessary. Over the other surface of the support, on which the heat-sensitive adhesive layer is not formed, at least a recording layer is formed.

### <Adhesive Under Layer>

The adhesive under layer contains at least a thermoplastic resin, and contains other components as necessary.

### - Thermoplastic Resin -

The thermoplastic resin has a glass transition temperature (Tg) of -70°C to -10°C, and a mass average molecular mass of 100,000 to 1,500,000.

When the adhesive under layer contains a thermoplastic resin having a glass transition temperature (Tg) of -70°C to -10°C, the adhesive under layer has excellent adhesive force at room temperature environment (25°C) to high temperature environment (40°C), but at low temperature environment (0°C) the thermoplastic resin in the adhesive under layer becomes hard to move to the surface, because temperature rapidly decreases after thermal activation, thereby not contributing to adhesive force. The glass transition temperature of the thermoplastic resin is preferably -70°C to -20°C.

When the mass average molecular mass of the thermoplastic resin in the adhesive under layer is reduced, the thermoplastic resin in the adhesive under layer becomes easy to move to a surface of the heat-sensitive adhesive layer even under the environment in which the temperature rapidly decreases after thermal activation, thereby excellent in adhesive force at low temperature environment. The mass average molecular mass of the thermoplastic resin is preferably 100,000 to 500,000. When the mass average molecular mass is less than 100,000, the thermoplastic resin in the adhesive under layer drastically moves upon thermal activation, and it becomes hard to convey the heat-sensitive adhesive material in an activating device due to its adherence. On the other hand, when the mass average molecular mass is more than 1,500,000, the thermoplastic resin in the adhesive under layer is hard to move to the surface, and adhesive force at low temperature environment may be insufficient.

Here, the mass average molecular mass of the thermoplastic resin is measured by gel permeation chromatography (GPC) under the following condition using a sample obtained by drying a thermoplastic resin at 100°C, immersing 0.2g of the dried thermoplastic resin in 50g of tetrahydrofuran (THF) at room temperature for 1 day, diluting 2g of the dissolved thermoplastic resin five-fold with THF, and then filtrating with a filter having a pore diameter of 0.5µm.

### -Measurement Condition of GPC-

- Measurement apparatus: HCL-8220GPC manufactured by TOSOH CORPORATION
- Column: 2 sets of Shodex KF-800D and KF-805L
- Eluent: tetrahydrofuran (THF)
- Column thermostat temperature: 40°C
- Flow rate: 1.0 ml/min
- Density: approximately 0.1 wt/vol%
- Amount of injection: 100 µl
- Detector: differential refractometer (RI)

However, a resin having a mass average molecular mass of more than 1,500,000 does not dissolve in a solvent (THF) used in GPC measurement, and the molecular mass measurement by GPC cannot be performed. Therefore, an accurate mass average molecular mass cannot be obtained. However, it becomes apparent that a resin which does not dissolve in THF has a mass average molecular mass of more than 1,500,000.

The glass transition temperature of the thermoplastic resin can be measured by a differential scanning calorimetry apparatus or differential thermal analysis apparatus, after the thermoplastic resin is dried. A glass transition temperature of a copolymer can be obtained by calculating based on the glass transition temperatures of respective homopolymers.

### -Thermoplastic Resin-

The thermoplastic resin used in the adhesive under layer is selected according to the intended use, as long as it satisfies the ranges of the above-described glass transition temperature and mass average molecular mass. Examples thereof include styrene-butadiene copolymers, acrylic acid ester copolymers, methacrylic acid ester copolymers , and ethylene-vinyl acetate copolymers. These may be used alone or in combination. Of these, acrylic acid ester copolymers, acrylic acid ester-acrylonitrile copolymers, acrylic acid ester-acrylonitrile-vinyl acetate copolymers, acrylic acid ester-styrene copolymers, and acrylic acid ester-methacrylic acid ester-styrene copolymers are particularly preferable.

The method of forming the adhesive under layer is not particularly limited and may be formed according to a known method. For example, the adhesive under layer is preferably formed by a coating method using a coating liquid for adhesive under layer, which is prepared by stirring and dispersing the above components, and if necessary, other components in water. Examples of the coating methods include blade coating, gravure coating, gravure offset coating, bar-coating, roller coating, knife coating, air-knife coating, comma coating, U comma coating, AKKU coating, smoothing coating, micro-gravure coating, reverse roller coating, four or five rollers coating, dip coating, drop curtain coating, slide coating and die coating.

The coated amount of the coating liquid for adhesive under layer is preferably 2 g/m² to 35 g/m², and more preferably 4 g/m² to 25 g/m², as dried amount. When the coated amount is less than 2 g/m², a sufficient adhesive force may not be obtained when the adhesive under layer is adhered by thermal activation. When the coated amount is more than 35 g/m², it is economically undesirable because the adhesive force and the heat insulation effect are saturated.

### <Intermediate Layer>

The intermediate layer contains at least a thermoplastic resin and hollow particles, and further contains other components as necessary.

### -Thermoplastic Resin-

As the thermoplastic resin, the same thermoplastic resin as that used in the adhesive under layer can be used.

### -Hollow Particles-

The hollow particles are not particularly limited and may be suitably selected according to the intended use. The hollow spherical plastic particles are preferable because excellent insulation effect can be obtained by high hollow rate and excellent adhesion with a heat source can be obtained by cushioning properties of deformed particles in activation methods using a heat roller or thermal head.

The hollow spherical plastic particles means hollow particles in the foamed state, and each containing a thermoplastic resin as a shell, and air and other gases inside the thermoplastic resin.

Of these, in consideration of low-energy thermal activation (high-sensitive thermal activation), the hollow spherical plastic particles having heat insulation effect, a volume average particle diameter of 2.0 µm to 5.0 µm and a hollow rate of 70% or more are preferable. The hollow particles having a maximum particle diameter of 10.0 µm or less, a volume average particle diameter of 2.0 µm to 5.0 µm and a hollow rate of 70% or more are more preferable. With use of hollow particles having a low hollow rate, thermal energy is released out from a thermal head through to the support because of insufficient insulation effect, and its high-sensitive thermal activation effect may be reduced.

Here, "hollow rate" means a ratio of a diameter of a hollow portion to an external diameter in a hollow particle, and expressed by the following formula.

Hollow rate (%) = [(diameter of a hollow portion of a hollow particle)/(external diameter of the hollow particle)] x 100

When the heat-sensitive adhesive layer is formed on the intermediate layer using hollow particles having a volume average particle diameter of more than 5.0 µm, regions are inconveniently generated in which no heat-sensitive adhesive layer is formed due to the large particles, and the adhesive force of the heat-sensitive adhesive material is likely to be reduced upon thermal activation. When the volume average particle diameter is less than 2.0 µm, it may be difficult to ensure a hollow rate of 70% or more, resulting in poor effect of thermal activation with low energy. The hollow rate of the hollow particles used in the intermediate layer is preferably 70% or more in order to obtain effect of thermal activation with low energy using a thermal head.

Examples of materials of the hollow spherical plastic particles, which satisfy the above conditions, include acrylonitrile-vinylidene chloride-methyl methacrylate copolymers and acrylonitrile-methacrylonitrile-isobonyl methacrylate copolymers.

In the intermediate layer, a ratio of the hollow spherical plastic particles to the thermoplastic resin is preferably 0.1 parts by mass to 1.0 part by mass, relative to 1.0 part by mass of the thermoplastic resin. When the ratio of the hollow spherical plastic particles is less than 0.1 parts by mass, high-sensitive thermal activation effect may be reduced, and additionally blocking resistance may be reduced. When the ratio of the hollow spherical plastic particles is more than 1.0 part by mass, adhesive force to rough-surfaced adherends such as a corrugated board, adherends such as a polyolefin wrap is not improved and only adhesive force of heat-sensitive adhesive layer provided as an upper layer is effective.

A method for forming the intermediate layer is not particularly limited and the intermediate layer may be formed by a known method. For example, the intermediate layer is preferably formed by a coating method using a coating liquid for intermediate layer, which is prepared by stirring and dispersing the above components, and if necessary, other components, in water.

Examples of the coating methods include blade coating, gravure coating, gravure offset coating, bar-coating, roller coating, knife coating, air-knife coating, comma coating, U comma coating, AKKU coating, smoothing coating, micro-gravure coating, reverse roller coating, four or five rollers coating, dip coating, drop curtain coating, slide coating and die coating.

The coated amount of the coating liquid for intermediate layer is preferably 0.2 g/m² to 10 g/m², and more preferably 1 g/m² to 5 g/m², as dried amount. When the coated amount is less than 0.2 g/m², heat insulation effect upon thermal activation may not be obtained. When the coated amount is more than 10 g/m², it is economically undesirable because the adhesive force and the heat insulation effect are saturated.

### <Heat-Sensitive Adhesive Layer>

The heat-sensitive adhesive layer contains at least a thermoplastic resin, adhesion imparting agent and thermofusible material, and further contains other components as necessary.

### - Thermoplastic Resin-

As a thermoplastic resin, the same thermoplastic resin as that used in the adhesive under layer and intermediate layer can be used.

In the heat-sensitive adhesive layer, by use of the same kind of thermoplastic resin as that used in the adhesive under layer and the intermediate layer, thermoplastic resins are well mixed, thereby enhancing the adhesive force to rough-surfaced adherends such as a corrugated board, and a polyolefin wrap.

### -Thermofusible Material-

As the thermofusible material, those solid at room temperature and fused by heating are used.

The melting point of the thermofusible material is preferably 70°C or more, more preferably 80°C or more, and the maximum value of the melting point is approximately 200°C. When the melting point is less than 70°C, troubles in storage (blocking) may occur, for example, the thermofusible material used in a heat-sensitive adhesive may exhibit adhesive force at normal storage environment temperature. Further, troubles in production may occur, for example the thermofusible material may exhibit adhesive force when a coating liquid for heat-sensitive layer is applied to a base material and dried. When the melting point is more than 200°C, a large amount of energy is required to make adhesive force exhibited, and troubles may occur in practical use. Moreover, when thermosensitive recording paper is used as a base material and adhesive force is exhibited with a large amount of energy, the heat-sensitive recording layer itself is color-developed. As a result, a printed image may not be read.

Examples of the thermofusible materials include benzotriazole compounds represented by General Formula (1), hydroxy benzoate ester compounds represented by General Formula (2), compounds represented by any one of General Formulas (3), (4), and (5), and compounds represented by any one of General Formulas (6) and (7). 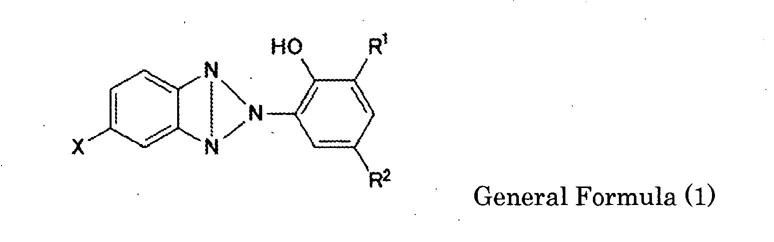 where R¹ and R² may be identical or different, and respectively represent any one of a hydrogen atom, alkyl group and α,α-dimethylbenzyl group; and X represents any one of a hydrogen atom and halogen atom.

The alkyl group in General Formula (1) preferably has 1 to 8 carbon atoms, and examples thereof include a methyl group, ethyl group, n-propyl group, n-butyl group, n-pentyl group, n-hexyl group, and n-heptyl group. Each of these alkyl groups may be further substituted by substituent groups.

Examples of the substituent groups include a hydroxyl group, halogen atom, nitro group, carboxyl group, cyano group; and alkyl group, aryl group, heterocyclic group, which may have specific substituent groups (for example, halogen atom or nitro group).

Examples of the halogen atoms include fluorine, chlorine, bromine, and iodine.

Examples of the benzotriazole compounds represented by General Formula (1) include 2-(2'-hydroxy-5'-methylphenyl) benzotriazole, 2-(2'-hydroxy-5'-t-octylphenyl) benzotriazole, 2-(2'-hydroxy-3'-t-butyl-5'-methylphenyl)-5-chlorobenzotriazole, 2-(2'-hydroxy-3',5'-di-t-amylphenyl) benzotriazole, 2-(2'-hydroxy-3',5'-t-butylphenyl)-5-chlorobenzotriazole, 2-[2'-hydroxy-3',5'-di(1,1-dimethylbenzyl) phenyl] benzotriazole, 2-(2'-hydroxy-3',5'-di-t-butylphenyl) benzotriazole, and 2-(2'-hydroxy-3'-sec-butyl-5'-t-butylphenyl) benzotriazole. These may be used alone or in combination. 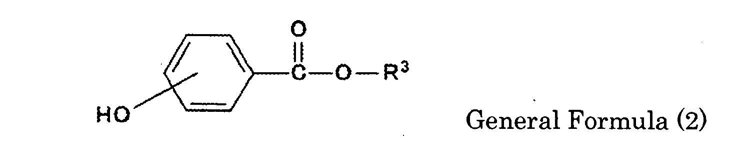 where R³ represents any one of alkyl group, alkenyl group, aralkyl group, and aryl group, and these groups may be further substituted by substituent groups.

For the alkyl group in General Formula (2), alkyl groups having 1 to 18 carbon atoms are exemplified. Examples thereof include straight chain alkyl groups such as a methyl group, ethyl group, n-propyl group, n-butyl group, n-pentyl group, n-hexyl group, n-heptyl group, n-octyl group, n-nonyl group, and n-decyl group; branched alkyl groups such as an isobutyl group, isoamyl group, 2-methylbutyl group, 2-methylpentyl group, 3-methylpentyl group, 4-methylpentyl group, 2-ethylbutyl group, 2-methylhexyl group, 3-methylhexyl group, 4-methylhexyl group, 5-methylhexyl group, 2-ethylpentyl group, 3-ethylpentyl group, 2-methylheptyl group, 3-methylheptyl group, 4-methylheptyl group, 5-methylheptyl group, 2-ethylhexyl group, 3-ethylhexyl group, isopropyl group, sec-butyl group, 1-ethylpropyl group, 1-methylbutyl group, 1,2-dimethylpropyl group, 1-methylheptyl group, 1-ethylbutyl group, 1,3-dimethylbutyl group, 1,2-dimethylbutyl group, 1-ethyl-2-methylpropyl group, 1-methylhexyl group, 1-ethylheptyl group, 1-propylbutyl group, 1-isopropyl-2-methylpropyl group, 1-ethyl-2-methylbutyl group, 1-propyl-2-methylpropyl group, 1-ethylhexyl group, 1-propylpentyl group, 1-isopropylpentyl group, 1-isopropyl-2-methylbutyl group, 1-isopropyl-3-methylbutyl group, 1-methyloctyl group, 1-propylhexyl group, 1-isobutyl-3-methylbutyl group, neopentyl group, tert-butyl group, tert-hexyl group, tert-amyl group, and tert-octyl group; and cycloalkyl groups such as a cyclohexyl group, 4-methylcyclohexyl group, 4-ethylcyclohexyl group, 4-tert-butylcyclohexyl group, 4-(2-ethylhexyl) cyclohexyl group, bornyl group, isobornyl group, and adamantyl group. Each of these alkyl groups may be further substituted by substituent groups.

For the alkenyl group in General Formula (2), alkenyl groups having 2 to 8 carbon atoms are preferable. Examples thereof include a vinyl group, aryl group, 1-propenyl group, methacryl group, crotyl group, 1-butenyl group, 3-butenyl group, 2-pentenyl group, 4-pentenyl group, 2-hexenyl group, 5-hexenyl group, 2-heptenyl group, and 2-octenyl group. Each of these alkenyl groups may be further substituted by substituent groups.

The aralkyl groups in General Formula (2) is not particularly limited and may be suitably selected according to the intended use. Examples thereof include a benzyl group, phenylethyl group and phenylpropyl group. Each of these aralkyl groups may be further substituted by substituent groups.

Examples of the aryl groups in General Formula (2) include a phenyl group, naphthyl group, anthranil group, fluorenyl group, phenalenyl group, phenanthranyl group, triphenylenyl group, and pyrenyl group. Each of these aryl groups may be further substituted by substituent groups.

Examples of the substituent groups of the alkyl group, alkenyl group, aralkyl group or aryl group include a hydroxyl group, halogen atom, nitro group, carboxyl group, cyano group; and alkyl group, aryl group and heterocyclic group, which may have specific substituent groups (for example, a halogen atom and nitro group).

Examples of the hydroxy benzoate ester compounds represented by General Formula (2) include methyl m-hydroxy benzoate, ethyl m-hydroxy benzoate, phenyl m-hydroxy benzoate, methyl p-hydroxy benzoate, ethyl p-hydroxy benzoate, n-propyl p-hydroxy benzoate, n-butyl p-hydroxy benzoate, p-hydroxy stearyl benzoate, p-hydroxycyclohexyl benzoate, p-benzyl hydroxy benzoate, p-hydroxy benzoate 4-chlorobenzyl, p-hydroxy benzoate 4-methylbenzyl, and p-hydroxy phenyl benzoate. These may be used alone or in combination. 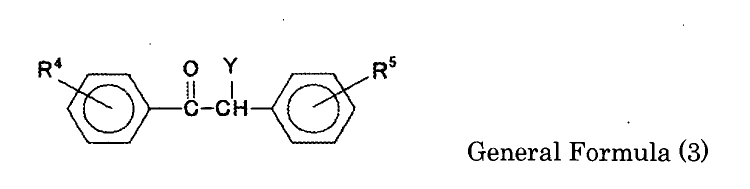 where R¹ and R⁵ may be identical or different, and respectively represent any one of an alkyl group and alkoxy group; and Y represents any one of a hydrogen atom and hydroxyl group. 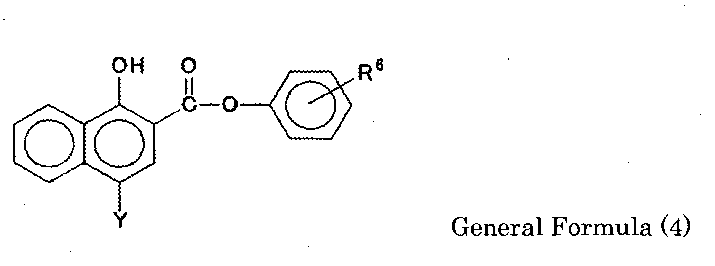 where R⁶ represents any one of a hydrogen atom, halogen atom, alkyl group and alkoxy group; and Y represents any one of a hydrogen atom and hydroxyl group. 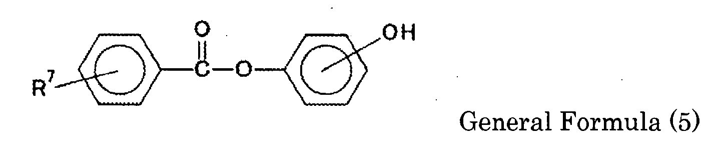 where R⁷ represents any one of a hydrogen atom, halogen atom, alkyl group, and alkoxy group.

In General Formulas (3) to (5), for the alkyl group, the same ones mentioned as in General Formula (1) are exemplified.

Examples of the alkoxy groups in General Formulas (3) to (5) include a methoxy group, ethoxy group, propyloxy group, i-propyloxy group, buthoxy group, i-buthoxy group, t-buthoxy group, pentyloxy group, hexyloxy group, cyclohexyloxy group, heptyloxy group, octyloxy group, 2-ethylhexyloxy group, nonyloxy group, decyloxy group, 3,7-dimethyloctyloxy group, and lauryloxy group.

Examples of compounds represented by General Formula (3) include Toluoin, Anisoin, m-Anisoin, Deoxytoluoin, Deoxy Anisonin, 4,4'-Diethyl Benzoin, and 4,4'-Diethoxy Benzoin. Each of these may be used alone or in combination.

Examples of compounds represented by General Formula (4) include phenyl-1-hydroxy-2-naphthoate,
p-chlorophenyl-1-hydroxy-2-naphthoate,
o-chlorophenyl-1-hydroxy-2-naphthoate,
p-methylphenyl-1-hydroxy-2-naphthoate,
o-methylphenyl-1-hydroxy-2-naphthoate,
phenyl-1,4-dihydroxy-2-naphthoate,
p-chlorophenyl-1,4-dihydroxy-2-naphthoate and
o-chlorophenyl-1,4-dihydroxy-2-naphthoate. These may be used alone or in combination.

Examples of compounds represented by General Formula (5) include 3-hydroxyphenyl benzoate, 4-hydroxyphenyl-benzoate, 2-hydroxyphenyl-benzoate, o-methyl-3-hydroxyphenyl benzoate, and p-chloro-3-hydroxyphenyl benzoate. These may be used alone or in combination.

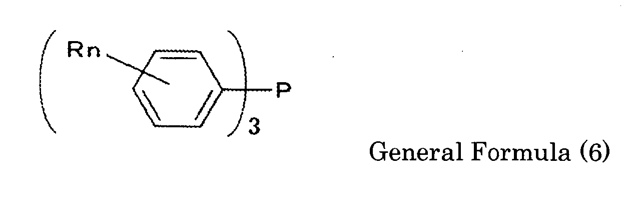

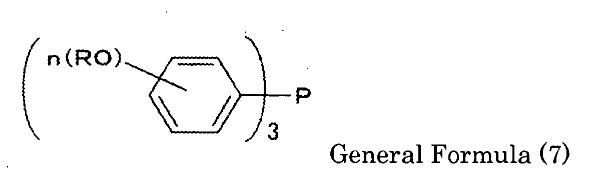

In General Formula (6) and (7), R represents an alkyl group that may be branched and have 1 to 4 carbon atoms such as a methyl group, ethyl group, propyl group, butyl group, and t-butyl group; and "n" represents an integer of 1 to 5.

Examples of compounds represented by General Formula (6) include triphenylphosphine, tri-m-tolylphosphine, tri-p-tolylphosphine, tri-o-tolylphosphine, tri-2,4-xylene phosphine, tri-2,5-xylene phosphine, tri-2,6-xylene phosphine, tri-3,4-xylene phosphine, and tri-3,5-xylene phosphine. These may be used alone or in combination.

Examples of compounds represented by General Formula (7) include tris (o-methoxyphenyl) phosphine, tris (m-methoxyphenyl) phosphine, tris (p-methoxyphenyl) phosphine, tris (p-ethoxyphenyl) phosphine, tris (p-n-propyloxyphenyl) phosphine, tris (m-t-buthoxyphenyl) phosphine, tris (m-n-buthoxyphenyl) phosphine, tris (p-n-buthoxyphenyl) phosphine and tris (p-t-buthoxyphenyl) phosphine. These may be used alone or in combination.

In addition to those represented by General Formulas (1) to (7), other compounds may be used as the thermofusible material, as long as they are solid at room temperature and can be mixed with a thermoplastic resin upon heating and melting. The compounds are not particularly limited and may be suitably selected according to the intended use. Examples thereof include 2,2-ethylidene-bis-(4,6-di-t-butylphenol), bis(3,5-di-t-butyl-4-hydroxybenzyl)sulfide, 2-(3,5-di-t-butyl-4-hydroxybenzyl)-2-n-butylmalonate bis(1,2,2,6,6-pentamethyl-4-piperidyl), 1,6-hexanediol bis[3-(3,5-di-t-butyl-4-hydroxyphenyl)propionate], 3,9-bis[2-[3-(3-t-butyl-4-hydroxy-5-methylphenyl)propionyloxy]-1,1-dimethylethyl]-2,4-6-(1H,3H,5H)trione, 2,4-di-t-pentylphenyl-3,5-di-t-butyl-4-hydroxybenzoate, 2,2'-methylenebis[6-(1-methylcyclohexyl)-p-cresol], 4,4'-methylenebis(2,6-di-t-butylphenol), 1,4-dihydroxy-2-naphthoic acid phenyl ester, 2,2'-butylidenebis(4-methyl-6-t-butylphenol), 2,2',4,4'-tetrahydroxybenzophenone, 4-benzyloxy-2-hydroxybenzophenone, 2-(4,6-diphenyl-1,3,5-triazine-2-yl)-5[(hexyl)oxy]phenol, 6-[3-(3-t-butyl-4-hydroxy-5-methylpropoxy)-2,4,8,10-tetra-t-butyl dibenz[d,f][1,3,2]]-dioxaphosphorine, amide phosphate, 2-(4'-molpholinodithio)benzothiazole, 1-o-tolylbiguanide, tris(2,4-di-t-butylphenyl)phosphite and benzoate 2-naphthy.

### - Adhesion imparting agent -

The adhesion imparting agent is added to increase the adhesive force of the heat-sensitive adhesive layer, is not particularly limited and may be suitably selected from those known in the art according to the intended use. Examples thereof include rosin derivatives, terpene resins, petroleum resins, phenol resins and xylene resins.

Examples of rosin derivatives include a rosin, polymerized rosin and hydrogenerated rosin.

Examples of terpene resins include terpene resins, aromatic modified terpene resins, terpene phenol resins and hydrogenerated terpene resins.

These adhesion imparting agents are soluble in thermoplastic resins and thermofusible materials so as to remarkably enhance the adhesive force of the heat-sensitive adhesive layer.

The method of forming the heat-sensitive adhesive layer is not particularly limited and the heat-sensitive adhesive layer may be formed according to a known method. For example, the heat-sensitive adhesive layer is preferably formed by a coating method using a coating liquid for heat-sensitive adhesive layer, which is prepared by stirring and dispersing the above components, and if necessary, other components in water.

Examples of the coating method include blade coating, gravure coating, gravure offset coating, bar-coating, roller coating, knife coating, air-knife coating, comma coating, U comma coating, AKKU coating, smoothing coating, micro-gravure coating, reverse roller coating, four or five rollers coating, dip coating, drop curtain coating, slide coating and die coating.

As drying conditions of coating or printing, the liquid for heat-sensitive adhesive layer should be dried within a range of temperature at which thermofusible materials to be used cannot be melted. For a method of drying, in addition to hot-air drying, a drying method by means of a heat source using infrared rays, microwaves or high-frequency wave can be used.

The coated amount of the coating liquid for heat-sensitive adhesive layer is preferably 3 g/m² to 20 g/m², and more preferably 5 g/m² to 15 g/m², as dried amount coated. When the coated amount is less than 3 g/m², a sufficient adhesive force may not be obtained when the heat-sensitive adhesive layer is heated, and blocking resistance may be reduced because a thermoplastic resin having a low glass transition temperature (Tg) is used in the intermediate layer and adhesive under layer. When the coated amount is more than 20 g/m², heat insulation effect of the intermediate layer may be reduced, and it is economically undesirable.

### < Support >

The support is not particularly limited as to the shape, structure, size and the like and may be suitably selected according to the intended use. Examples of the shape include a flat plate shape. For the structure, the support may have a single layer structure or may have a multi-layered structure. The size of the support may be suitably selected according to the size of the heat-sensitive adhesive material.

A material of the support is not particularly limited and may be suitably selected according to the intended use. For example, inorganic materials or organic materials are exemplified. Examples of the inorganic materials include glass, quartz, silicon, silicon oxides, aluminum oxides, SiO₂ and metals. Examples of the organic materials include paper such as high-quality paper, art paper, coat paper and synthetic paper; cellulose derivatives such as cellulose triacetate; polyester resins such as polyethylene terephthalate (PET) and polybutylene terephthalate; polycarbonate, polystyrene, polymethyl methacrylate, polyamide; polyolefins such as polyethylene and polypropylene. Of these, high-quality paper, coat paper, plastic film and synthetic paper are preferable, and plastic film and synthetic paper are particularly preferable. These may be used alone or in combination.

Examples of the synthetic paper include those made from a synthetic fiber such as polyethylene, polypropylene, polyethylene terephthalate, polyamide, etc. and those with one of these papers partly bonded, or bonded to one surface thereof or bonded to both surfaces thereof. Examples of commercially available products of the synthetic papers include FPG, FGS, GFG and KPK (manufactured by YUPO Corporation).

With use of a support made from a film or synthetic paper, liquid infiltration to the heat-sensitive adhesive layer is inferior to high-quality paper and waste paper made from pulp or the like, and the anchor property of the support is significantly insufficient. Further, the contact activation method using a thermal heat has been a focus of attention because of recent tendency to respond to demands for safety, high-speed performance and on-demand processability as a thermal activation method. On the other hand, the contact activation using a thermal head has a side-effect that the thermal head scrapes off a surface of the thermally-activated heat-sensitive adhesive layer. Particularly in thermal activation, a thermal head itself is heated to high temperature so as to activate the entire surface of a label. As a result, the heat-sensitive adhesive layer is significantly layered down. However, in the present invention, even when a film or synthetic paper is used as a support, it is possible to prevent layer-down and shrinkage of the film and the synthetic paper upon thermal activation, and no glue remains at the time of re-labeling.

It is preferable that the support surface is modified by subjecting the surface to a corona discharge treatment, an oxidizing reaction treatment (with chromic acid, etc.), an etching treatment, an easy bonding treatment, or an antistatic treatment to improve the adhesiveness of the coated layer. Further, a white pigment such as a titanium oxide is preferably added on the support to make it white.

The thickness of the support is not particularly limited and may be suitably selected according to the intended use. It is preferably 50 µm to 2,000 µm, and more preferably 100 µm to 1,000 µm.

The heat-sensitive adhesive material of the present invention contains a recording layer or a recording layer and protective layer in this order over a surface of the support, if necessary, other layers formed over the surface which is opposite to a surface on which the heat-sensitive adhesive layer is formed.

The recording layer is not particularly limited and may be suitably selected according to the intended use. Preferred examples thereof include a heat-sensitive recording layer, ink-receiving layer for thermal transfer recording, electrophotographic toner receiving layer, recording layer for silver halide photography and inkjet-ink receiving layer.

Of these, a thermal recording adhesion material having a heat-sensitive recording layer containing a leuco dye and a color developer, and a heat-sensitive adhesive material having an ink-receiving layer for thermal transfer recording have strong adhesive force to various adherends, particularly, rough-surfaced adherends such as a corrugated board and a polyolefin wrap, and have excellent thermal activation property with low energy and blocking resistance, thereby outstandingly useful.

### <Heat-Sensitive Adhesive Material for Heat-Sensitive Recording>

The heat-sensitive recording layer contains a color coupler such as a leuco dye, a color developer and a binder resin and further contains other components such as a filler as necessary.

The leuco dye is not particularly limited and may be suitably selected from known leuco dyes according to the intended use. Examples thereof include triphenylmethane dyes, fluoran dyes, phenothiazine dyes, auramine dyes, spiropyran dyes and indolinophthalide dyes.

Examples of leuco dyes include 3,3-bis (p-dimethylaminophenyl) phthalide, 3,3-bis (p-dimethylaminophenyl)-6-dimethylaminophthalide (also referred to as: crystal violet lactone), 3,3-bis(p-dimethylaminophenyl)-6-diethylaminophthalide, 3,3-bis(p-dimethylaminophenyl)-6-chlorophthalide, 3,3-bis(p-dibutylaminophenyl) phthalide, 3-cyclohexylamino-6-chlorofluoran, 3-dimethylamino-5,7-dimethylfluoran, 3-diethylamino-7-chlorofluoran, 3-diethylamino-7-methylfluoran, 3-diethylamino-7,8-benzfluoran, 3-diethylamino-6-methyl-7-chlorofluoran, 3-(N-p-tolyl-N-ethylamino)-6-methyl-7-anilinofluoran, 3-pyrrolidino-6-methyl-7-anilinofluoran, 2-[N-(3'-trifluoromethylphenyl) amino]-6-diethylaminofluoran, 3-diethylamino-6-methyl-7-(m-trichloromethylanilino) fluoran, 3-diethylamino-7-(o-chloroanilino) fluoran, 3-dibutylamino-7-(o-chloroanilino) fluoran, 3-N-methyl-N-amylamino-6-methyl-7-anilinofluoran, 3-N-methyl-N-cyclohexylamino-6-methyl-7-anilinofluoran, 3-diethylamino-6-methyl-7-anilinofluoran, 3-(N,N-diethylamino)-5-methyl-7-(N,N-dibenzyl amino) fluoran, benzoyl-leucomethylene blue, 6'-chloro-8'-methoxy-benzoindolino-spiropyran, 6'-bromo-3'-methoxy-benzoindolino-spiropyran, 3-(2'-hydroxy-4'-dimethylaminophenyl)-3-(2'-methoxy-5'-chlorophenyl) phthalide, 3-(2'-hydroxy-4'-dimethylaminophenyl)-3-(2'-methoxy-5'-nitrophenyl) phthalide, 3-(2'-hydroxy-4'-diethylaminophenyl)-3-(2'-methoxy-5'-methylphenyl) phthalide, 3-diethylamino-6-methyl-7-(2',4'-dimethylanilino) fluoran, 3-(2'-methoxy-4'-dimethylaminophenyl)-3-(2'-hydroxy-4'-chloro-5'-methylp henyl) phthalide, 3-morfolino-7-(N-propyl-trifluoromethylanilino) fluoran, 3-pyrrolidino-7-trifluoromethylanilino-fluoran, 3-diethylamino-5-chloro-7-(N-benzyl-trifluoromethylanilino) fluoran, 3-pyrrolidino-7-(di-p-chlorophenyl) methylamino fluoran, 3-diethylamino-5-chloro-7-(α-phenyl ethylamino) fluoran, 3-(N-ethyl-p-toluidino)-7-(α-phenyl ethylamino) fluoran, 3-diethylamino-7-(o-methoxycarbonyl phenylamino) fluoran, 3-diethylamino-5-methyl-7-(α-phenyl ethylamino) fluoran, 3-diethylamino-7-pyperidino fluoran, 2-chloro-3-(N-methyltoluidino)-7-(p-n-butylanilino) fluoran, 3-(N-benzyl-N-cyclohexylamino)-5,6-benzo-7-α-naphthylamino-4'-o-bromofluoran, 3-diethylamino-6-methyl-7-(2',4'-dimethylanilino) fluoran, 3-(p-dimethylaminophenyl)-3-[1,1-bis (p-dimethylaminophenyl) ethylene-2-yl] phthalide, 3-(p-dimethylaminophenyl)-3-[1,1-bis (p-dimethylaminophenyl) ethylene-2-yl]-6-dimethylamino phthalide, 3-(p-dimethylaminophenyl)-3-(1-p-dimethylaminophenyl-1-phenylethylene-2-yl) phthalide, 3-(p-dimethylaminophenyl-3-(1-p-dimethylaminophenyl-1-p-chlorophenyl ethylene-2-yl)-6-dimethylamino phthalide, 3-(4'-dimethylamino-2'-methoxy)-3-(1"-p-dimethylaminophenyl-1"-p-chlorophenyl-1", 3"-butadiene-4"-yl) benzophthalide, 3-(4'-dimethylamino-2'-benzyloxy)-3-(1"-p-dimethylaminophenyl-1"-phenyl-1",3"-butadiene-4"-yl) benzophthalide, 3-dimethylamino-6-dimethylamino-fluorene-9-spiro-3'-(6'-dimethylamino) phthalide, 3,3-bis[2-(p-dimethylaminophenyl)-2-(p-methoxyphenyl) ethenyl]-4,5,6,7-tetrachlorophtalide, 3-bis[1,1-bis (4-pyrrolidinophenyl) ethylene-2-yl]-5,6-dichloro-4,7-dibromophthalide, bis(p-dimethylaminostyryl)-1-naphthalene sulfonyl methane, 3-(N-methyl-N-propylamino)-6-methyl-7-anilido fluoran, 3-diethylamino-6-methyl-7-anilino fluoran, 3,6-bis (dimethylamino) fluoran spiro(9,3')-6'-dimethylaminophthalide, 3-diethylamino-6-chloro-7-anilinofluoran, 3-N-ethyl-N-(2-ethoxypropyl) amino-6-methyl-7-anilinofluoran, 3-N-ethyl-N-tetrahydrofurfurylamino-6-methyl-7-anilino fluoran, 3-diethylamino-6-methyl-7-mesitydino-4',5'-benzofluoran, 3-N-methyl-N-isobutyl-6-methyl-7-anilinofluoran and 3-N-ethyl-N-isoamyl-6-methyl-7-anilinofluoran. These may be used alone or in combination.

The color developer is not particularly limited and may be suitably selected from known electron-acceptable compounds according to the intended use. Examples thereof include phenol compounds, thiophenol compounds, thiourea derivatives, and organic acids and metal salts thereof.

Examples of the color developers include 4,4'-isopropyliden bisphenol, 3,4'-isopropylidene bisphenol, 4,4'-idopropylidene bis(o-methylphenol), 4,4'-s-butylidene bisphenol, 4,4'-isopropyliden bis (o-t-butylphenol), 4,4'-cyclohexylidene phenol, 4,4'-isopropylidene bis(2-chlorophenol), 2,2'-methylene bis(4-methyl-6-t-butylphenol), 2,2'-methylene bis(4-ethyl-6-t-butylphenol), 4,4'-butylidene bis(6-t-butyl-2-methyl) phenol, 1,1,3-tris(2-methyl-4-hydroxy-5-t-butylphenyl) butane, 1,1,3-tris (2-methyl-4-hydroxy-5-cyclohexyl phenyl) butane, 4,4'-thiobis(6-t-butyl-2-methyl) phenol, 4,4'-diphenol sulfone, 4,2'-diphenol sulfone, 4-isopropoxy-4'-hydroxy diphenyl sulfone, 4-benzyloxy-4'-hydroxydiphenyl sulfone, 4,4'-diphenol sulfoxide, p-hydroxy isopropyl benzoate, p-hydroxybenzyl benzoate, benzyl protocatechuic acid, stearyl gallate, lauryl gallate, octyl gallate, 1,7-bis(4-hydroxyphenyl thio)-3,5-dioxaheptane, 1,5-bis(4-hydroxyphenyl thio)-3-oxaheptane, 1,3-bis(4-hydroxyphenyl thio)-propane, 2,2'-methylenebis(4-ethyl-6-t-butylphenol), 1,3-bis(4-hydroxyphenylthio)-2-hydroxypropane, N,N'-diphenyl thio urea, N,N'-di(m-chlorophenyl) thio urea, salicylanilide, 5-chloro-salicylanilide, salicyl-o-chloroanilide, 2-hydroxy-3-naphthoate, antipyrine complexes of zinc thiocyanate, zinc salts of 2-acetyloxy-3-naphthoic acid, metal salts of 2-hydroxy-1-naphthoic acid, 1-hydroxy-2-naphthoic acid, zinc of hydroxy naphthoic acid, aluminum and calcium, bis-(4-hydroxyphenyl) methyl acetate ester, bis-(4-hydroxyphenyl) benzyl acetate ester, 4-[β-(p-methoxyphenoxy) ethoxy]salicylic acid, 1,3-bis(4-hydroxycumyl) benzene, 1,4-bis (4-hydroxycumyl) benzene, 2,4'-diphenolsulfone, 3,3'-diallyl-4,4'-diphenolsulfone, antipyrine complexes of α,α-bis(4-hydroxyphenyl)-α-methyl toluene zinc thiocyanate, tetrabromobisphenol A, tetrabromobisphenol S, 4,4'-thiobis (2-methylphenol), 3,4-hydroxy-4'-methyl-diphenyl sulfone and 4,4'-thiobis (2-chrorophenol). These may be used alone or in combination.

The amount of the color developer in the heat-sensitive recording layer is not particularly limited and may be suitably adjusted according to the intended use. It is preferably 1 part by mass to 20 parts by mass, and more preferably 2 parts by mass to 10 parts by mass, relative to 1 part by mass of the leuco dye.

The binder resin is not particularly limited and may be suitably selected from those known in the art according to the intended use. Examples thereof include polyvinyl alcohols, starches or derivatives thereof; cellulose derivatives such as methoxy cellulose, hydroxyethyl cellulose, carboxy methyl cellulose, methyl cellulose and ethyl cellulose; water-soluble polymers such as polyacrylic acid soda, polyvinyl pyrrolidone, acrylamide-acrylic acid ester copolymer, acrylamide-acrylic acid ester-methacrylic acid ternary copolymer, styrene-maleic anhydride copolymer alkaline salt, isobutylene-maleic anhydride copolymer alkaline salt, polyacrylamide, alginic acid soda, gelatin and casein; emulsions of polyvinyl acetate, polyurethane, polyacrylic acid, polyacrylic acid ester, polymethacrylic acid ester, polybutyl methacrylate, vinylchloride-vinylacetate copolymer, and ethylene-vinylacetate copolymer; and latexes of styrene-butadiene copolymer, and styrene-butadiene-acryl copolymer. These may be used alone or in combination.

In the heat-sensitive recording layer, various thermofusible materials can be used as fillers.

The thermofusible material is not particularly limited and may be suitably selected according to the intended use. Examples of the thermofusible materials include fatty acids such as stearic acid and behenic acid; fatty acid amides such as stearic acid amide and palmitic acid amide; fatty acid metal salts such as zinc stearate, aluminum stearate, calcium stearate, zinc palmitate and zinc behenate; p-benzylbiphenyl, terphenyl, triphenyl methane, p-benzyloxy benzoic acid benzyl, β-benzyloxy naphthalene, β-naphthoic acid phenyl ester, 1-hydroxy-2-naphthoic acid phenyl ester, 1-hydroxy-2-naphthoic acid methyl ester, diphenyl carbonate, terephthalic acid dibenzyl ester, terephthalic acid dimethyl ester, 1,4-dimethoxy naphthalene, 1,4-diethoxy naphthalene, 1,4-dibenzyloxy naphthalene, 1,2-bis (phenoxy) ethane, 1,2-bis(3-methylphenoxy) ethane, 1,2-bis(4-methylphenoxy) ethane, 1,4-bis (phenoxy) butane, 1,4-bis (phenoxy)-2-butene, 1,2-bis(4-methoxyphenylthio) ethane, dibenzoyl methane, 1,4-bis(phenyl thio) butane, 1,4-bis(phenyl thio)-2-butene, 1,2-bis(4-methoxyphenyl thio) ethane, 1,3-bis(2-vinyloxy ethoxy) benzene, 1,4-bis(2-vinyloxy ethoxy) benzene, p-(2-vinyloxy ethoxy) biphenyl, p-aryloxy biphenyl, p-propargyloxy biphenyl, dibenzoyloxy methane, 1,3-dibenzoyloxy propane, dibenzyl disulfide, 1,1-diphenyl ethanol, 1,1-diphenyl propanol, p-(benzyloxy) benzyl alcohol, 1,3-diphenoxy-2-propanol, N-octadecyl carbamoyl-p-methoxy carbonyl benzene, N-octadecyl carbamoyl benzene, oxalic acid dibenzyl ester and 1,5-bis(p-methoxyphenyloxy)-3-oxapentane. These may be used alone or in combination.

In the heat-sensitive recording layer, as other components, various auxiliary additive components, such as a surfactant and a lubricant can be used in combination as necessary. Examples of lubricants include higher fatty acids or metal salts thereof, higher fatty acid amides, higher fatty acid esters, animal waxes, vegetable waxes, mineral waxes and petroleum waxes.

The method of forming the heat-sensitive recording layer is not particularly limited, and the heat-sensitive recording layer can be formed by a generally know method. For example, a leuco dye and a color developer are respectively pulverized and dispersed with a binder resin and other components by a dispersing device such as a ball mill, an attritor and a sand mill until the particle diameter of the dispersion becomes 1 µm to 3 µm, and if necessary, mixed along with a filler, dispersion of a thermofusible material (sensitizer) and the like in a specific formulation to prepare a coating liquid for heat-sensitive recording layer, and then the coating liquid is applied over a surface of a support, thereby forming the heat-sensitive recording layer on the support.

The thickness of the heat-sensitive recording layer varies depending on the composition of the heat-sensitive recording layer and application of the heat-sensitive adhesive material and cannot be uniformly defined, however, it is preferably 1 µm to 50 µm, and more preferably 3 µm to 20 µm.

### <Heat-Sensitive Adhesive Material for Thermal Transfer Recording>

The ink-receiving layer for thermal transfer recording in the heat-sensitive adhesive material for thermal transfer recording contains a filler, a binder resin and a water resistant additive and further contains other components as necessary.

The filler is not particularly limited and may be suitably selected according to the intended use. Examples thereof include fine powders of calcium carbonate, silica, titanium oxide, aluminum hydroxide, clay, calcined clay, magnesium silicate, magnesium carbonate, white carbon, zinc oxide, barium sulfate, surface treated calcium carbonate, surface treated silica, urea-formalin resin, styrene-methacrylic acid copolymer and polystyrene.

The binder resin is not particularly limited and may be suitably selected from known water-soluble resins. Examples thereof include polyvinyl alcohols, starches or derivatives thereof; cellulose derivatives such as methoxy cellulose, hydroxyethyl cellulose, carboxy methyl cellulose, methyl cellulose and ethyl cellulose; water-soluble polymers such as polyacrylic acid soda, polyvinyl pyrrolidone, acrylamide-acrylic acid ester copolymer, acrylamide-acrylic acid ester-methacrylic acid ternary copolymer, styrene-maleic anhydride copolymer alkaline salt, isobutylene-maleic anhydride copolymer alkaline salt, polyacrylamide, alginic acid soda, gelatin and casein. These may be used alone or in combination.

The ratio between the filler and the water-soluble resin in the ink-receiving layer is preferably (filler: water-soluble resin (solid content)) 1 : 0.1 to 0.2 (mass ratio) in terms of blocking resistance.

The water resistant additive is not particularly limited and may be suitably selected according to the intended use. Examples thereof include formaldehydes, glyoxals, chrome alums, melamines, melamine-formaldehyde resins, polyamide resins and polyamide-epichlorohydrin resins.

The ratio between the water resistant additive and the water-soluble resin is preferably (water-soluble resin (solid content) : water resistant additive) 1 : 0.3 to 0.5 (mass ratio) in terms of blocking resistance.

Such ink-receiving layer can be formed by containing a combination of the filler and water-soluble resin, in addition, a combination of the water-soluble resin and water resistant additive respectively at a certain ratio in a coating liquid for ink-receiving layer. Moreover, in addition to the effect obtained by the filler, the print quality can be further enhanced by subjecting the ink-receiving layer surface to a calender treatment so as to obtain a smoothness of 500 seconds or more.

### - Protective Layer -

The protective layer contains at least a resin and further contains other components as necessary.

For the resin, for example, a hydrophobic resin emulsion or a water-soluble resin can be used, however, a film formed by using a water-soluble resin is preferable in terms of barrier property as the protective layer. When a water-soluble resin is used, the function of the water-soluble resin can be enhanced by using a crosslinking agent to make it water resistant.

For the water-soluble resin, polyvinyl alcohols are typically used, and a combination of a polyvinyl alcohol with a crosslinking agent for water resistant can be suitably selected for use. Examples of the combinations include a combination between carboxy-modified polyvinyl alcohol and a polyamide epichlorohydrin resin and a combination between polyvinyl alcohol having a reactive carbonyl group (PVAα) and a hydrazide compound.

Of these, a protective layer, which contains the polyvinyl alcohol having a reactive carbonyl group (PVAα) and a hydrazide compound as a crosslinking agent, has extremely high heat-resistance and water-resistance, and is hardly affected by application of pressure, temperature, and humidity, and thus the blocking resistance can be remarkably enhanced.

The polyvinyl alcohol having a reactive carbonyl group (PVAα) can be produced by a known method such as a method of saponifying a polymer which is obtained by copolymerizing a vinyl monomer having a reactive carbonyl group and a fatty acid vinyl ester.

Examples of the vinyl monomers having a reactive carbonyl group include groups having an ester residue and groups having an acetone group. Vinyl monomers having a diacetone group are preferable. Specifically, diacetone acrylamide and methadiacetone acrylamide are preferable.

Examples of the fatty acid vinyl esters include vinyl formate, vinyl acetates, and vinyl propionates. Of these, vinyl acetates are particularly preferable.

The polyvinyl alcohol having a reactive carbonyl group (PVAα) may be a copolymer formed by copolymerization of copolymerizable other vinyl monomers. Examples of these copolymerizable vinyl monomers include acrylic acid esters, butadienes, ethylenes, propylene acrylic acids, methacrylic acids, maleic acids, maleic anhydrides and itaconic acids.

The amount of the reactive carbonyl group in the polyvinyl alcohol having a reacting carbonyl group (PVAα) is preferably 0.5 mol% to 20 mol % of the total polymer content. In view of water-resistance, it is more preferably 2 mol% to 10 mol% of the total polymer content. When the amount is less than 0.5 mol%, the water-resistance is insufficient in practical use. When the amount is more than 20 mol%, further enhanced water-resistance cannot be obtained, making the process costly, thereby not economical.

The polymerization degree of the polyvinyl alcohol having a reactive carbonyl group (PVAα) is preferably 300 to 3,000, and more preferably 500 to 2,200. The saponification degree of the polyvinyl alcohol having a reactive carbonyl group (PVAα) is preferably 80% or more.

The hydrazide compound is not particularly limited as long as the compound has a hydrazide group, and may be suitably selected according to the intended use. Examples thereof include carbohydrazide, oxalic acid dihydrazide, hydrazide formate, hydrazide acetate, malonic acid dihydrazide, succinic acid dihydrazide, adipic acid dihydrazide, azelaic acid hydrazide, sebacic acid dihydrazide, dodecanedioic acid dihydrazide, maleic acid dihydrazide, fumaric acid hydrazide, itaconic acid dihydrazide, hydrazide benzoate, glutaric acid dihydrazide, diglycolic acid hydrazide, tartaric acid dihydrazide, malic acid dihydrazide, isophthalic acid hydrazide, terephthalic acid dihydrazide, 2,7-naphthoic acid dihydrazide and polyacrylic hydrazide. These may be used alone or in combination. Of these, adipic acid dihydrazide is preferable in terms of water-resistance and safety.

The amount of the hydrazide compound is preferably 5 parts by mass to 40 parts by mass, and more preferably 15 parts by mass to 25 parts by mass relative to 100 parts by mass of the polyvinyl alcohol having a reactive carbonyl group (PVAα).

The protective layer preferably contains a filler. The filler is not particularly limited and may be suitably selected from those known according to the intended use. Examples thereof include inorganic pigments such as calcium carbonates, zinc oxides, aluminum oxides, titanium dioxides, silicas, aluminum hydroxides, barium sulfate, talc, kaolin, alumina, clay, and alkaline silicic acids; and organic pigments. Of these, aluminum hydroxides and calcium carbonates, which are basic fillers, are preferable in terms of matching to a thermal head (preventing adhesion of foreign substances), etc., and aluminum hydroxides are particularly preferable in view of pH control with appropriate water-soluble bases.

Further, in view of water-resistance (water-resistant peel-resistant property), silicas, kaolins, aluminas, which are acidic pigments or exhibit acidic property in aqueous solutions, are preferable. Silicas are particularly preferable in terms of color developing concentration.

The method of forming the protective layer is not particularly limited and may be formed by a generally known method. For example, a coating liquid for protective layer is prepared by a conventional method and the coating liquid is applied over the surface of the recording layer so as to form a protective layer.

The thickness of the protective layer is not particularly limited and may be suitably selected according to the intended use, and it is preferably 1.0 µm to 7.0 µm.

Between the support and the recording layer, the intermediate layer can be formed as necessary. For components constituting the intermediate layer, fillers, binders, thermofusible materials, surfactants and the like can be used.

The heat-sensitive adhesive material of the present invention can be preferably used by cutting before or after the heat-sensitive adhesive layer is thermally activated or heated. In this case, it is preferable that cut lines be previously formed in the heat-sensitive adhesive material, so that the heat-sensitive adhesive material can be preferably used for various applications such as labels and tags.

The shape of the heat-sensitive adhesive material of the present invention is not particularly limited and may be suitably selected according to the intended use. Preferred examples thereof include a label shape, sheet-shape and rolled-shape. Of these, a rolled-shape, which is a long sheet of the heat-sensitive adhesive material stored in a condition where it is rewound to a cylindrical core and rolled in a roll shape, is preferable in terms of convenience, storage space and handleability.

Adherends, to which the heat-sensitive adhesive material of the present invention is affixed, are not particularly limited and the size, shape, structure, material and the like may be suitably selected according to the intended use. Examples of materials thereof include polyolefins such as polyethylene and polypropylene; resin plates made from acrylate, polyethylene terephthalate (PET), polystyrene and nylon; metal plates made from SUS and aluminum; paper products such as envelopes and corrugated boards; polyolefin wraps; polyvinyl chloride wraps; non-wovens made of polyethylene such as envelopes. Of these, the heat-sensitive adhesive material is advantageously used for rough-surfaced adherends such as corrugated boards, which are usually hard to be adhered, because it has strong adhesive force thereto and can be strongly affixed thereto.

The method of thermally activating the heat-sensitive adhesive layer in the heat-sensitive adhesive material of the present invention is not particularly limited and may be suitably selected according to the intended use. Examples thereof include activation methods utilizing hot air, a heat roller or a thermal head. Of these, activation methods utilizing a thermal head are particularly preferable, because not only information can be recorded on the heat-sensitive recording layer, but also the heat-sensitive adhesive layer can be thermally activated by heating both surfaces of the heat-sensitive adhesive material by using an existing thermosensitive recording printer.

The present invention can solve the conventional problems and provides a heat-sensitive adhesive material having strong adhesive force to rough-surfaced adherends such as a corrugated board, particularly, having excellent adhesive force to rough-surfaced adherends such as a corrugated board at low temperature environment, and capable of being thermally activated. Such a heat-sensitive adhesive material requires no release paper and significantly contributes to a field of label and environmental conservation.

### EXAMPLES

Hereinafter, Examples of the present invention will be explained, which should not be construed to limit the present invention. All part(s) are expressed by mass unless indicated otherwise.

### (Synthesis Example 1)

### -Synthesis of Thermoplastic Resin Liquid A-1-

In a pressure-resistant autoclave equipped with a nitrogen inlet and thermometer, 120 parts of 1% aqueous polyvinyl alcohol solution (polymerization degree: 12,600, saponification degree: 88 mole%), and 0.1 parts of sodium salt of alkyldiphenyl ether disulfonic acid (SANDET BL manufactured by Sanyo Chemical Industries, Ltd.) were charged, additionally 35 parts of styrene were charged, and then the autoclave was purged with nitrogen. Subsequently, 65 parts of butadiene were pressed thereinto from a pressure resistant meter and heated to 70°C, 25 parts of 2% aqueous potassium persulfate solution were pressed thereinto and then polymerized for 15 hours so as to obtain a styrene-butadiene copolymer emulsion. Water was then added to adjust the nonvolatile content of the styrene-butadiene copolymer emulsion, thereby obtaining a copolymer emulsion having a nonvolatile content of 50%.

The glass transition temperature (Tg) of the obtained resin was measured and found to be -50°C, and the mass average molecular mass of the obtained resin was measured by a manner described later and found to be 1,000,000.

### (Synthesis Example 2)

### -Synthesis of Thermoplastic Resin Liquids A-2 to A-10-

One hundred (100) parts of a monomer mixture shown in Table 1, tert-dodecyl mercaptan (TDM) as a molecular mass adjustor, AQUARON KH10 (containing ammonium sulfate salt of polyoxyethylene alkyl ether as a basic skeleton, manufactured by DAI-ICHI KOGYO SEIYAKU CO., LTD.) as an emulsifier, and deionized water were mixed and stirred to prepare a monomer preemulsion. Next, in a flask equipped with a dropping funnel, stirrer, thermometer, nitrogen gas introducing tube and reflux condenser, 2% of the 100% monomer preemulsion, 41 parts of deionized water and 0.1 parts of initiator azobiscyanovaleric acid (ACVA) were charged and reacted at approximately 80°C under nitrogen atmosphere for 20 minutes. Thereafter, the rest of the monomer preemulsion, i.e. 98% of the 100% monomer preemulsion and 0.07 parts of an initiator ACVA were continuously dropped over 3 hours to perform polymerization reaction, and then kept at 80°C for 3 hours. The obtained copolymer was adjusted to have a pH of 7 to 9 with an aqueous sodium hydroxide solution, and an unreacted monomer and the like were removed by steam distillation. The nonvolatile content was then adjusted by adding water to obtain a copolymer emulsion having a nonvolatile content of 50%.

The glass transition temperature (Tg) of the obtained resin, and the mass average molecular mass of the obtained resin was measured by the following manner are shown in Table 1.

### <Mass Average Molecular Mass of Thermoplastic Resin>

The mass average molecular mass of the thermoplastic resin was measured by gel permeation chromatography (GPC) under the following condition using a sample obtained by drying a thermoplastic resin at 100°C, immersing 0.2g of the dried thermoplastic resin in 50g of tetrahydrofuran (THF) at room temperature for 1 day, diluting 2g of dissolved thermoplastic resin five-fold with THF, and then filtrating with a filter having a pore diameter of 0.5µm.

### -Measurement Condition of GPC-

- Measurement apparatus: HCL-8220GPC manufactured by TOSOH CORPORATION
- Column: 2 sets of SHODEX KF-800D and KF-805L
- Eluent: tetrahydrofuran (THF)
- Column thermostat temperature: 40°C
- Flow rate: 1.0 ml/min
- Density: approximately 0.1 wt/vol%
- Amount of injection: 100 µl
- Detector: differential refractometer (RI)

However, a resin having a mass average molecular mass of more than 1,500,000 did not dissolve in a solvent (THF) used in GPC measurement, and the molecular mass measurement by GPC could not be performed. Therefore, an accurate mass average molecular mass could not be obtained. However, it became apparent that a resin which had not dissolved in THF had a mass average molecular mass of more than 1,500,000.

**Table 1**

| | | A-1 | A-2 | A-3 | A-4 | A-5 | A-6 | A-7 | A-8 | A-9 | A-10 |
|---|---|---|---|---|---|---|---|---|---|---|---|
| monomer component ratio (parts by mass) | acrylic acid n-butyl | | | | | | | | | | 55 |
| | acrylic acid 2-ethylhexyl | | 95 | 95 | 95 | 95 | 95 | 92 | 70 | 70 | |
| | methyl methacrylate | | 2 | 2 | 2 | 2 | 2 | | 20 | 20 | |
| | acrylonitrile | | | | | | | 5 | | | 45 |
| | acrylic acid | | | | | | | 2 | | | |
| | vinyl acetate | | | | | | | 1 | | | |
| | styrene | 35 | 3 | 3 | 3 | 3 | 3 | | 10 | 10 | |
| | butadiene | 65 | | | | | | | | | |
| TDM (parts by mass) | | - | 0.01 | 0.02 | 0.08 | 0.08 | 0.01 | 0.02 | 0.01 | 0.1 | 0.02 |
| AQUARON KH10 (parts by mass) | | - | 1 | 2 | 4 | 3 | 0.08 | 2 | 0.05 | 5 | 2 |
| deionized water (parts by mass) | | - | 34 | 34 | 34 | 34 | 34 | 34 | 34 | 34 | 34 |
| copolymer Tg (°C) | | -50 | -65 | -65 | -65 | -65 | -65 | -63 | -37 | -37 | -3 |
| mass average molecular mass | | 1,000,000 | 1,000,000 | 500,000 | 100,000 | 200,000 | 1,200,000 | 500,000 | -* | 50,000 | 500,000 |

| | | | | | | | | | | | |
|---|---|---|---|---|---|---|---|---|---|---|---|
| *A-8 is insoluble in THF, thus it had a mass average molecular mass of more than 1,500,000. | | | | | | | | | | | |

### Preparation Example 1-1

### <Preparation of Coating Liquid for Adhesive Under Layer [Liquid B-1]>

A mixture containing the following composition was stirred to prepare a coating liquid for adhesive under layer [Liquid B-1].
- Thermoplastic resin liquid (A-1) 100.0 parts
- Surfactant (DAPRO W-77, Elementis Japan KK) 0.1 parts Preparation Example 1-2

### <Preparation of Coating Liquid for Adhesive Under Layer [Liquid B-2]>

A coating liquid for adhesive under layer [Liquid B-2] was prepared in the same manner as in [Liquid B-1], except that the thermoplastic resin liquid (A-1) was changed to a thermoplastic resin liquid (A-2).

### Preparation Example 1-3

### <Preparation of Coating Liquid for Adhesive Under Layer [Liquid B-3]>

A coating liquid for adhesive under layer [Liquid B-3] was prepared in the same manner as in [Liquid B-1], except that the thermoplastic resin liquid (A-1) was changed to a thermoplastic resin liquid (A-3).

### Preparation Example 1-4

### <Preparation of Coating Liquid for Adhesive Under Layer [Liquid B-4]>

A coating liquid for adhesive under layer [Liquid B-4] was prepared in the same manner as in [Liquid B-1], except that the thermoplastic resin liquid (A-1) was changed to a thermoplastic resin liquid (A-4).

### Preparation Example 1-5

### <Preparation of Coating Liquid for Adhesive Under Layer [Liquid B-5]>

A coating liquid for adhesive under layer [Liquid B-5] was prepared in the same manner as in [Liquid B-1], except that the thermoplastic resin liquid (A-1) was changed to a thermoplastic resin liquid (A-5).

### Preparation Example 1-6

### <Preparation of Coating Liquid for Adhesive Under Layer [Liquid B-6]>

A coating liquid for adhesive under layer [Liquid B-6] was prepared in the same manner as in [Liquid B-1], except that the thermoplastic resin liquid (A-1) was changed to a thermoplastic resin liquid (A-6).

### Preparation Example 1-7

### <Preparation of Coating Liquid for Adhesive Under Layer [Liquid B-7]>

A coating liquid for adhesive under layer [Liquid B-7] was prepared in the same manner as in [Liquid B-1], except that the thermoplastic resin liquid (A-1) was changed to a thermoplastic resin liquid (A-7).

### Preparation Example 1-8

### <Preparation of Coating Liquid for Adhesive Under Layer [Liquid B-8]>

A coating liquid for adhesive under layer [Liquid B-8] was prepared in the same manner as in [Liquid B-1], except that the thermoplastic resin liquid (A-1) was changed to a thermoplastic resin liquid (A-8).

### Preparation Example 1-9

### <Preparation of Coating Liquid for Adhesive Under Layer [Liquid B-9]>

A coating liquid for adhesive under layer [Liquid B-9] was prepared in the same manner as in [Liquid B-1], except that the thermoplastic resin liquid (A-1) was changed to a thermoplastic resin liquid (A-9).

### Preparation Example 1-10

### <Preparation of Coating Liquid for Adhesive Under Layer [Liquid B-10]>

A coating liquid for adhesive under layer [Liquid B-10] was prepared in the same manner as in [Liquid B-1], except that the thermoplastic resin liquid (A-1) was changed to a thermoplastic resin liquid (A-10).

### Preparation Example 2-1

### <Preparation of Coating Liquid for Intermediate Layer [Liquid C-1]>

A mixture containing the following composition was stirred and dispersed to prepare a coating liquid for intermediate layer [Liquid C-1].
- Hollow spherical plastic particles [1] 14.6 parts (acrylonitrile-vinylidene chloride-methyl methacrylate copolymer; solid content concentration: 41% by mass, volume average particle diameter: 3.6 µm, hollow rate: 90%)
- 2-ethylhexyl acrylate-methyl methacrylate-styrene 21.7 parts copolymer (glass transition temperature (Tg): -65°C, solid content concentration: 55.4 % by mass, manufactured by SHOWA HIGHPOLYMER CO., LTD.)
- Surfactant (DAPRO W-77, manufactured by Elementis 0.1 parts Japan KK)
- Water 63.7 parts

### Preparation Example 2-2

### <Preparation of Coating Liquid for Intermediate Layer [Liquid C-2]>

A mixture containing the following composition was stirred and dispersed to prepare a coating liquid for intermediate layer [Liquid C-2].
- Hollow spherical plastic particles [1] 14.6 parts (acrylonitrile-vinylidene chloride-methyl methacrylate copolymer; solid content concentration: 41% by mass, volume average particle diameter: 3.6 µm, hollow rate: 90%)
- Styrene-butadiene copolymer latex (glass transition 25.0 parts temperature (Tg): 4°C, solid content concentration: 48 % by mass, manufactured by NIPPON A & L INC.)
- Surfactant (DAPRO W-77, manufactured by Elementis 0.1 parts Japan KK)
- Water 60.4 parts Preparation Example 2-3

### <Preparation of Coating Liquid for Intermediate Layer [Liquid C-3]>

A mixture containing the following composition was stirred and dispersed to prepare a coating liquid for intermediate layer [Liquid C-3].
- Hollow spherical plastic particles [1] 14.6 parts (acrylonitrile-vinylidene chloride-methyl methacrylate copolymer; solid content concentration: 41% by mass, volume average particle diameter: 3.6 µm, hollow rate: 90%)

- Acrylic ester copolymer (glass transition temperature (Tg): 20.0 parts -35°C, solid content concentration: 60% by mass, BPW6111 manufactured by TOYO INK MFG. CO., LTD.)
- Surfactant (DAPRO W-77, manufactured by Elementis 0.1 parts Japan KK)
- Water 65.4 parts Preparation Example 2-4

### <Preparation of Coating Liquid for Intermediate Layer [Liquid C-4]>

A mixture containing the following composition was stirred and dispersed to prepare a coating liquid for intermediate layer [Liquid C-4].
- Spherical plastic particles (PMMA, volume average 6 parts particle diameter: 3µm, MX300, manufactured by Soken Chemical & Engineering Co., Ltd.)
- 2-ethylhexyl acrylate-methyl methacrylate-styrene copolymer 21.7 parts (glass transition temperature (Tg): -65°C, solid content concentration: 55.4% by mass, manufactured by Showa High Polymer Co., Ltd.)
- Surfactant (DAPRO W-77, manufactured by Elementis 0.1 parts Japan KK)
- Water 72.3 parts Preparation Example 3-1

### <Preparation of Thermofusible Material Dispersion [Liquid D]>

A mixture containing the following composition was dispersed using a sand mill so as to have a volume average particle diameter of 1.0 µm, thereby preparing a thermofusible material dispersion [Liquid D].
- 2-(2'-hydroxy-3'-t-butyl-5'-methylphenyl)-5- 40.0 parts chlorobenzotriazole (melting point: 138°C)
- Polyvinyl alcohol (30% by mass aqueous solution, 6.7 parts GOHSELAN L-3266, manufactured by The Nippon Synthetic Chemical Industry Co., Ltd.)
- Surfactant (OLFINE PD-001, Nissin Chemical Industry 0.2 parts Co., Ltd.)
- Water 53.1 parts

### Preparation Example 3-2

### <Preparation of Coating Liquid for Heat-Sensitive Adhesive Layer [Liquid E]>

A mixture containing the following composition was uniformly mixed to prepare a coating liquid for heat-sensitive adhesive layer [Liquid E].
- Ethylhexyl acrylate-methyl methacrylate-styrene 9.0 parts copolymer (glass transition temperature (Tg): -65°C, solid content concentration: 55.4% by mass, manufactured by SHOWA HIGHPOLYMER CO., LTD.)
- Polymerized rosin emulsion (softening point: 145°C, 6.0 parts nonvolatile content: 50%)
- Thermofusible Material Dispersion [Liquid D] 37.5 parts Production Example 1

### <Production of Thermosensitive Recording Paper>

### -Preparation of Coating Liquid for Non-Foamable Heat-Insulating Layer [Liquid F]-

A mixture containing the following composition was stirred and dispersed to prepare a coating liquid for non-foamable heat-insulating layer [Liquid F].
- Minute hollow particle dispersion (a copolymer resin 30.0 parts mainly containing vinylidene chloride and acrylonitrile; solid content concentration: 32 %, average particle diameter: 3.6 µm, hollow rate: 92%)
- Styrene-butadiene copolymer latex (glass transition 10.0 parts temperature (Tg): 4°C, solid content concentration: 48 % by mass, manufactured by NIPPON A & L INC.)
- Surfactant (DAPRO W-77, manufactured by Elementis 0.1 parts Japan KK)
- Water 60.0 parts

### - Preparation of Color-Coupler Dispersion Liquid [Liquid G]-

A mixture containing the following composition was dispersed using a sand mill so as to have a volume average particle diameter of approximately 1.5µm, thereby preparing a color-coupler dispersion liquid [Liquid G].
- 3-di-n-butylamino-6-methyl-7-anilinofluoran 20 parts
- Polyvinyl alcohol (10% by mass aqueous solution, 10 parts GOHSELAN L-3266, manufactured by The Nippon Synthetic Chemical Industry Co., Ltd.)
- Water 70 parts

### - Preparation of Color-Developer Dispersion Liquid [Liquid H]-

A mixture containing the following composition was dispersed using a sand mill so as to have a volume average particle diameter of approximately 1.5µm, thereby preparing a color-developer dispersion liquid [Liquid H].
- 4-isopropoxy-4'-hydroxy diphenyl sulfone 10 parts
- Polyvinyl alcohol (10% by mass aqueous solution, 25 parts GOHSELAN L-3266, manufactured by The Nippon Synthetic Chemical Industry Co., Ltd.)
- Calcium carbonate (CALSHITEC Bririant-15, 15 parts manufactured by SHIRAISHI KOGYO KAISHA, LTD.)
- Water 50 parts

### - Preparation of Coating Liquid for Heat-sensitive Recording Layer [Liquid I] -

Next, the color-coupler dispersion liquid [Liquid G] and the color-developer dispersion liquid [Liquid H] were mixed at a mixture ratio of [Liquid G] : [Liquid H] = 1 : 8 (mass ratio) and stirred to prepare a coating liquid for heat-sensitive recording layer [Liquid I].

Next, the coating liquid for forming a non-foamable heat-insulating layer [liquid F] was applied over a surface of a base material having an average basis weight of 80g/m² so as to have a dry mass of 4 g/m², thereby preparing a non-foamable heat-insulating layer. Subsequently, a coating liquid for heat-sensitive recording layer [Liquid I] was applied thereon so as to have a dry mass of 5 g/m², thereby preparing a heat-sensitive recording layer. Then, the base material having the heat-sensitive recording layer was subjected to a supercalender treatment so as to have an Oken smoothness of 2,000 seconds, thereby obtaining a paper covered with a heat-sensitive recording layer.

### [Preparation of Coating Liquid for Protective Layer]

### - Preparation of Protective Layer Primary Dispersion Liquid-

A mixture containing the following composition was pulverized and dispersed using a vertical sand mill so as to have a volume average particle diameter of 1 µm or less, thereby preparing a protective layer primary dispersion liquid.
- Aluminum hydroxide (H-42M, manufactured by Showa 20 parts Denko K.K.)
- Polyvinyl alcohol (10% by mass aqueous solution, 20 parts GOHSELAN L-3266, manufactured by The Nippon Synthetic Chemical Industry Co., Ltd.)
- Water 40 parts

Next, a mixture containing the following composition was stirred and dispersed to prepare a coating liquid for protective layer.
- Protective layer primary dispersion liquid 10 parts
- Polyvinyl alcohol (10% by mass aqueous solution, 20 parts GOHSELAN L-3266, manufactured by The Nippon Synthetic Chemical Industry Co., Ltd.)
- Epichlorohydrin (12. 5% by mass aqueous solution) 5 parts
- 30% by mass zinc stearate dispersion liquid 2 parts

### - Production of Thermosensitive Recording Paper-

The coating liquid for protective layer was applied over a surface of paper which had been covered with the heat-sensitive recording layer , so as to have a dry mass of 3.0g/m² and dried, and then the surface thereof was further subjected to a supercalender treatment so as to have an Oken smoothness of 2,000 seconds, thereby preparing a thermosensitive recording paper.

### Example 1

### - Production of Heat-Sensitive Adhesive Material-

Over a surface of the prepared thermosensitive recording paper, opposite to a surface on which the heat-sensitive recording layer was formed by applying the coating liquid for adhesive under layer (Liquid B-1), the coating liquid for intermediate layer (Liquid C-1), and the coating liquid for heat-sensitive adhesive layer (Liquid E) with a coated amount of 15g/m², 2g/m², and 10g/m², respectively, in this order, and dried to produce a heat-sensitive adhesive material of Example 1.

### (Examples 2 to 9 and Comparative Examples 1 to 6)

Each of the heat-sensitive adhesive materials of Examples 2 to 9 and Comparative Examples 1 to 6 was produced in the same manner as in Example 1, except that the coating liquid for adhesive under layer and the coating liquid for intermediate layer in Example 1 were changed to each of the combinations shown in Table 2.

**Table 2**

| | Coating liquid for adhesive under layer | Coating liquid for intermediate layer |
|---|---|---|
| Example 1 | B-1 | C-1 |
| Example 2 | B-2 | C-2 |
| Example 3 | B-6 | C-1 |
| Example 4 | B-2 | C-1 |
| Example 5 | B-3 | C-1 |
| Example 6 | B-5 | C-1 |
| Example 7 | B-4 | C-1 |
| Example 8 | B-7 | C-1 |
| Example 9 | B-7 | C-3 |
| Comparative Example 1 | B-8 | C-1 |
| Comparative Example 2 | B-9 | C-1 |
| Comparative Example 3 | B-10 | C-1 |
| Comparative Example 4 | B-1 | - |
| Comparative Example 5 | B-1 | C-4 |
| Comparative Example 6 | - | C-1 |

### < Measurement of Adhesive Force >

Each of the obtained heat-sensitive adhesive materials of Examples 1 to 9 and Comparative Examples 1 to 6 was respectively cut into a rectangle (40 mm x 150 mm) and each of the cut materials was thermally activated by use of a heat-sensitive printing apparatus (TH-PMD, manufactured by Ohkura Electric Co., Ltd.) under the conditions of a thermal head energy: 0.5 mJ/dot, printing speed: 4ms/line, and platen pressure: 6 kgf/line. Then, each of the heat-sensitive adhesive materials was affixed to a corrugated board along the longitudinal direction using a rubber roller while pressing at 2 kgf, and 1 hour later, peeled off therefrom under the conditions of a peeling angle: 180 degrees and peeling rate: 300 mm/min.

The adhesive force at that time was measured by means of a force gauge, and the measured data was read every 0.1 seconds and averaged to obtain a numerical value shown in Table 4. The adhesive force was measured under a low temperature condition of 0°C and a normal temperature condition of 22°C.

### < Evaluation of Blocking Resistance >

Each surface of the heat-sensitive adhesive layers in the thus obtained heat-sensitive adhesive materials was made contact with the opposite surface therefrom, i.e., the surface on which each of the heat-sensitive recording layers was formed, and the heat-sensitive adhesive materials were left intact under application of a pressure of 100 gf/cm² at a temperature of 40°C in dry atmosphere for 15 hours. Thereafter, they were left at room temperature and then each of the heat-sensitive adhesive materials was peeled off from the corrugated boards. The blocking resistance at that time was evaluated based on the evaluation criteria shown in Table 3. The results are shown in Table 4.

**Table 3**

| Rank | Evaluation | Resistance to peeling | Peel-off noise | Dot-like transfer | Delamination |
|---|---|---|---|---|---|
| 10 | A | Empty mass | | | |
| 9 | | Slightly gave resistance | No noise | | |
| 8 | B | Gave resistance | Slightly heard | | |
| 7 | | | Noise caused | | |
| 6 | C | | | Partly found | |
| 5 | | | | 30% to 50% | |
| 4 | | | | 50% to the entire surface | |
| 3 | D | | | | Partly found |
| 2 | | | | | 30% to 50% |
| 1 | | | | | 50% to the entire surface |

**Table 4**

| | Adhesive force at 0°C (gf/40mm) | Adhesive force at 22°C (gf/40mm) | Blocking resistance (Rank) | |
|---|---|---|---|---|
| Example 1 | 75 | 855 | 10 | A |
| Example 2 | 85 | 706 | 10 | A |
| Example 3 | 98 | 822 | 10 | A |
| Example 4 | 176 | 855 | 10 | A |
| Example 5 | 215 | 1794 | 9 | A |
| Example 6 | 984 | 1540 | 8 | B |
| Example 7 | 1484 | 1426 | 7 | B |
| Example 8 | 195 | 1554 | 9 | A |
| Example 9 | 181 | 1005 | 9 | A |
| Comparative Example 1 | 0 | 1322 | 10 | A |
| Comparative Example 2 | - | - | 1 | D |
| Comparative Example 3 | 0 | 552 | 10 | A |
| Comparative Example 4 | 0 | 175 | 2 | D |
| Comparative Example 5 | 0 | 170 | 3 | D |
| Comparative Example 6 | 0 | 823 | 10 | A |

As can be seen from the result of Table 4, a thermoplastic resin having a mass average molecular mass of 1,000,000 was used for the adhesive under layer in Example 1, so that the heat-sensitive adhesive material could be affixed to the corrugated board at low temperature environment (0°C).

In Example 2, the 2-ethylhexyl acrylate-methyl methacrylate-styrene copolymer was used as the thermoplastic resin in the adhesive under layer, so that the heat-sensitive adhesive material could be affixed to the corrugated board easier than in Example 1.

In Example 4, the thermoplastic resin in the adhesive under layer, the thermoplastic resin in the intermediate layer and the thermoplastic resin in the heat-sensitive adhesive layer were the same, so that the heat-sensitive adhesive material could be affixed to the corrugated board easier than in Example 2.

In Examples 3 to 7, as the mass average molecular mass of the thermoplastic resins in the adhesive under layers were decreased from 1,200,000, 1,000,000, 500,000, 200,000 to 100,000, the heat-sensitive adhesive materials were easily affixed to the corrugated boards at low temperature environment (0°C).

As each of the heat-sensitive adhesive materials of Examples 1 to 9 had the heat-sensitive recording layer on each of the surfaces of the supports, on which the heat-sensitive adhesive layer was not formed, each of the heat-sensitive adhesive materials was thermally activated to be affixed easily to each corrugated boards after information had been recorded on the heat-sensitive recording layers.

On the other hand, in Comparative Example 1, a thermoplastic resin having a mass average molecular mass of more than 1,500,000 was used in the adhesive under layer, so that the heat-sensitive adhesive material was not affixed to the corrugated board at low temperature environment.

In Comparative Example 2 a thermoplastic resin having a mass average molecular mass of 50,000 was used in the adhesive under layer, so that the thermoplastic resin in the adhesive under layer drastically moved upon thermal activation, and it became hard to convey the heat-sensitive adhesive material in an activating device due to its adherence.

In Comparative Example 3, the thermoplastic resin having a glass transition temperature (Tg) of -3°C was used in the adhesive under layer, so that the heat-sensitive adhesive material was not affixed to the corrugated board at low temperature environment, and adherence to the corrugated board at room temperature was poor.

Since the heat-sensitive adhesive material of the present invention has strong adhesive force, the adhesive force less decreases with a lapse of time, can be thermally activated with application of low energy by a thermal head, and used, for example, for resin plates made from polyolefine (such as polyethylene and polypropylene), acryl, polyethylene terephthalate (PET), polystyrene, nylon, etc.; metal plates made from stainless-steel (SUS), aluminum, etc.; paper products such as envelopes and corrugated boards; wraps made from polyolefins; wraps made from polyvinyl chloride and non-wovens made of polyethylene (such as envelopes), and particularly, the heat-sensitive adhesive material of the present invention has strong adhesive force to rough-surfaced adherends such as a corrugated boards and can be solidly affixed thereto.

## Claims

1. A heat-sensitive adhesive material comprising:
a support; and
an adhesive under layer, an intermediate layer and a heat-sensitive adhesive layer formed over one surface of the support in this order,
wherein the intermediate layer comprises at least a thermoplastic resin and hollow particles, wherein the thermoplastic resin comprises at least one selected from acrylic acid ester copolymers, methacrylic acid ester copolymers, styrene-butadiene copolymers, and ethylene-vinyl acetate copolymers,
the heat-sensitive adhesive layer comprises at least a thermoplastic resin, an adhesion imparting agent and a thermofusible material, and
the adhesive under layer comprises at least a thermoplastic resin, wherein the thermoplastic resin comprises at least one selected from acrylic acid ester copolymers, methacrylic acid ester copolymers, styrene-butadiene copolymers, and ethylene-vinyl acetate copolymers, and the thermoplastic resin has a glass transition temperature (Tg) of -70°C to -10°C and a mass average molecular mass of 100,000 to 1,500,000.

2. The heat-sensitive adhesive material according to Claim 1, wherein the thermoplastic resin in the adhesive under layer has a mass average molecular mass of 100,000 to 500,000.

3. The heat-sensitive adhesive material according to any one of Claims 1 and 2, wherein the thermoplastic resin in the adhesive under layer comprises at least one selected from acrylic acid ester copolymers, methacrylic acid ester copolymers, acrylic acid ester-methacrylic acid ester copolymers, acrylic acid ester-styrene copolymers, acrylic acid ester-acrylonitrile-acrylic acid-vinylacetate copolymers, acrylic acid ester-methacrylic acid ester-styrene copolymers, styrene-butadiene copolymers and ethylene-vinyl acetate copolymers.

4. The heat-sensitive adhesive material according to any one of Claims 1 to 3, wherein the hollow particles in the intermediate layer are hollow spherical plastic particles.

5. The heat-sensitive adhesive material according to any one of Claims 1 and 4, wherein the thermoplastic resin in the intermediate layer comprises at least one selected from acrylic acid ester copolymers, methacrylic acid ester copolymers, acrylic acid ester-methacrylic acid ester copolymers, acrylic acid ester-styrene copolymers, acrylic acid ester-methacrylic acid ester-styrene copolymers, styrene-butadiene copolymers and ethylene-vinyl acetate copolymers.

6. The heat-sensitive adhesive material according to any one of Claims 1 to 5, wherein the support has at least a recording layer on a surface opposite to a surface on which the heat-sensitive adhesive layer is formed.

7. The heat-sensitive adhesive material according to Claim 6, wherein the recording layer is a heat-sensitive recording layer.

## Patentansprüche

1. Wärmeempfindliches Klebmaterial, umfassend:
einen Träger; und
eine Kleb-Unterschicht, eine Zwischenschicht und eine wärmeempfindliche Klebschicht, die in dieser Reihenfolge über einer Oberfläche des Trägers gebildet sind,
wobei die Zwischenschicht mindestens ein thermoplastisches Harz und Hohlteilchen umfasst, wobei das thermoplastische Harz mindestens eines ausgewählt aus Acrylsäureester-Copolymeren, Methacrylsäureester-Copolymeren, Styrol-Butadien-Copolymeren und Ethylen-Vinylacetat-Copolymeren umfasst,
die wärmeempfindliche Klebschicht mindestens ein thermoplastisches Harz, ein Haftvermögen verleihendes Mittel und ein wärmeschmelzbares Material umfasst und
die Kleb-Unterschicht mindestens ein thermoplastisches Harz umfasst, wobei das thermoplastische Harz mindestens eines ausgewählt aus Acrylsäureester-Copolymeren, Methacrylsäureester-Copolymeren, Styrol-Butadien-Copolymeren und Ethylen-Vinylacetat-Copolymeren umfasst und das thermoplastische Harz eine Glasübergangstemperatur (Tg) von -70 °C bis -10 °C und ein Massenmittel der Molekülmasse von 100.000 bis 1.500.000 aufweist.

2. Wärmeempfindliches Klebmaterial nach Anspruch 1, wobei das thermoplastische Harz in der Kleb-Unterschicht ein Massenmittel der Molekülmasse von 100.000 bis 500.000 aufweist.

3. Wärmeempfindliches Klebmaterial nach irgendeinem der Ansprüche 1 und 2, wobei das thermoplastische Harz in der Kleb-Unterschicht mindestens eines ausgewählt aus Acrylsäureester-Copolymeren, Methacrylsäureester-Copolymeren, Acrylsäureester-Methacrylsäureester-Copolymeren, Acrylsäureester-Styrol-Copolymeren, Acrylsäureester-Acrylnitril-Acrylsäure-Vinylacetat-Copolymeren, Acrylsäureester-Methacrylsäureester-Styrol-Copolymeren, Styrol-Butadien-Copolymeren und Ethylen-Vinylacetat-Copolymeren umfasst.

4. Wärmeempfindliches Klebmaterial nach irgendeinem der Ansprüche 1 bis 3, wobei die Hohlteilchen in der Zwischenschicht kugelförmige Kunststoffhohlteilchen sind.

5. Wärmeempfindliches Klebmaterial nach irgendeinem der Ansprüche 1 und 4, wobei das thermoplastische Harz in der Zwischenschicht mindestens eines ausgewählt aus Acrylsäureester-Copolymeren, Methacrylsäureester-Copolymeren, Acrylsäureester-Methacrylsäureester-Copolymeren, Acrylsäureester-Styrol-Copolymeren, Acrylsäureester-Methacrylsäureester-Styrol-Copolymeren, Styrol-Butadien-Copolymeren und Ethylen-Vinylacetat-Copolymeren umfasst.

6. Wärmeempfindliches Klebmaterial nach irgendeinem der Ansprüche 1 bis 5, wobei der Träger mindestens eine Aufzeichnungsschicht auf einer zu einer Oberfläche, auf der die wärmeempfindliche Klebschicht gebildet ist, gegenüberliegenden Oberfläche aufweist.

7. Wärmeempfindliches Klebmaterial nach Anspruch 6, wobei die Aufzeichnungsschicht eine wärmeempfindliche Aufzeichnungsschicht ist.

## Revendications

1. Matériau adhésif thermosensible comprenant :
un support ; et
une sous-couche d'adhésif, une couche intermédiaire et une couche d'adhésif thermosensible formées sur une surface du support dans cet ordre,
dans lequel la couche intermédiaire comprend au moins une résine thermoplastique et des particules creuses, dans lequel la résine thermoplastique comprend au moins une choisie parmi des copolymères d'esters d'acide acrylique, des copolymères d'esters d'acide méthacrylique, des copolymères de styrène-butadiène et des copolymères d'éthylène-acétate de vinyle,
la couche adhésive thermosensible comprend au moins une résine thermoplastique, un agent communiquant une adhérence et un matériau thermofusible, et
la sous-couche d'adhésif comprend au moins une résine thermoplastique, dans lequel la résine thermoplastique comprend au moins une choisie parmi des copolymères d'esters d'acide acrylique, des copolymères d'esters d'acide méthacrylique, des copolymères de styrène-butadiène et des copolymères d'éthylène-acétate de vinyle, et la résine thermoplastique présente une température de transition vitreuse (Tg) de -70°C à -10°C et une masse moléculaire moyenne en poids de 100 000 à 1 500 000.

2. Matériau d'adhésif thermosensible selon la revendication 1, dans lequel la résine thermoplastique dans la sous-couche d'adhésif présente une masse moléculaire moyenne en poids de 100 000 à 500 000.

3. Matériau d'adhésif thermosensible selon l'une quelconque des revendications 1 et 2, dans lequel la résine thermoplastique dans la sous-couche d'adhésif comprend au moins une choisie parmi des copolymères d'esters d'acide acrylique, des copolymères d'esters d'acide méthacrylique, des copolymères d'esters d'acide acrylique-esters d'acide méthacrylique, des copolymères d'esters d'acide acrylique-styrène, des copolymères d'esters d'acide acrylique-acrylonitrile-acide acrylique-acétate de vinyle, des copolymères d'esters d'acide acrylique-esters d'acide méthacrylique-styrène, des copolymères de styrène-butadiène et des copolymères d'éthylène-acétate de vinyle.

4. Matériau d'adhésif thermosensible selon l'une quelconque des revendications 1 à 3, dans lequel les particules creuses dans la couche intermédiaire sont des particules plastiques sphériques creuses.

5. Matériau d'adhésif thermosensible selon l'une quelconque des revendications 1 et 4, dans lequel la résine thermoplastique dans la couche intermédiaire comprend au moins une choisie parmi des copolymères d'esters d'acide acrylique, des copolymères d'esters d'acide méthacrylique, des copolymères d'esters d'acide acrylique-d'esters d'acide méthacrylique, des copolymères d'esters d'acide acrylique-styrène, des copolymères d'esters d'acide acrylique-esters d'acide méthacrylique-styrène, des copolymères de styrène-butadiène et des copolymères d'éthylène-acétate de vinyle.

6. Matériau d'adhésif thermosensible selon l'une quelconque des revendications 1 à 5, dans lequel le support présente au moins une couche d'enregistrement sur une surface opposée à une surface sur laquelle est formée la couche d'adhésif thermosensible.

7. Matériau d'adhésif thermosensible selon la revendication 6, dans lequel la couche d'enregistrement est une couche d'enregistrement thermosensible.
